# EUROPEAN PATENT APPLICATION

(11) **EP 2 042 368 A2**
(43) Date of publication of application: **01.04.2009**
(21) Application number: 08165131.7
(22) Date of filing: 25.09.2008
(51) Int. Cl.: B60N 2/18

(54) **Positioning apparatus of seat for vehicle**

(30) Priority: 27.09.2007 JP 2007252718
(71) Applicant: Aisin Seiki Kabushiki Kaisha, Kariya-shi, Aichi 448-8650 (JP)
(72) Inventor: Koga, Yoshitaka c/o Aisin Seiki K.K., Kariya-shi Aichi 448-8650 (JP); Tsuji, Eiichiro c/o Aisin Seiki K.K., Kariya-shi Aichi 448-8650 (JP); Suzumura, Hirokazu c/o Aisin Seiki K.K., Kariya-shi Aichi 448-8650 (JP)
(74) Representative: TBK-Patent

(57) **Abstract**

A positioning apparatus of a seat for a vehicle includes a first frame (4) adapted to be supported by a member (71, 72) provided on a vehicle floor (9) and adapted to support a seat cushion (81), a second frame (3) rotatably supported by the first frame (4) and vertically rotatably supporting the seat cushion (81), a link member (24, 26) rotatably supported by the first frame (4) and linked to the second frame (3) for rotatably moving the second frame (3) relative to the first frame (4), and a rotational member (1) rotatably supported by the first frame (4) and including an eccentric shaft portion (11), wherein the eccentric shaft portion (11) has a first rotational portion (11a) including a first rotational center (B) about which the second frame (3) rotates relative to the first frame (4) and a second rotational portion (13a) including a second rotational center (A) about which the rotational member (1) rotates relative to the first frame (4) and which is eccentrically provided relative to the first rotational center (B).

## Description

### FIELD OF THE INVENTION

The present invention relates to a positioning apparatus of a seat for a vehicle.

### BACKGROUND

A known positioning apparatus of a seat cushion for a vehicle disclosed in JP2001-219767A (which is hereinbelow referred to as reference 1) includes a lower frame for supporting a seat cushion and a sub frame which is pivotably supported by the lower frame and which pivotably moves relative to the lower frame by means of a link member. The link member is pivotally supported to the sub frame about a torque rod. The sub frame is pivotally supported to the lower frame about a hinge shaft. Thus, normally, a pivot center of the link member and that of the sub frame are arranged at different positions. Accordingly, either the pivot center of the link member or that of the sub frame is displaced when being pivoted. According to the reference 1, in order to offset the displacement, an elongated hole is provided at the lower frame for slidably moving a pin fixed at the link member in a horizontal direction relative to the lower frame.

However, because the pin horizontally slides inside the elongated hole, a contacting portion between the pin and the elongated hole may be small. Accordingly, in a condition where the seat cushion receives an external load, for example, when an occupant is seated thereon, backlash may be generated at the positioning apparatus of the seat cushion for the vehicle. Another link member may be provided between the link member and the sub frame in order to prevent the backlash. However, in such a way, the number of components of the seat positioning apparatus may be increased.

A need thus exists for a positioning apparatus of a seat for a vehicle, of which a link member and a sub frame smoothly rotate without generating backlash even when receiving external load, and which restrains the number of components.

### SUMMARY OF THE INVENTION

According to an aspect of the present invention, a positioning apparatus of a seat for a vehicle includes a first frame adapted to be supported by a member provided on a vehicle floor and adapted to support a seat cushion of the seat, a second frame rotatably supported by the first frame and adapted to vertically rotatably support the seat cushion, a link member rotatably supported by the first frame and linked to the second frame for rotatably moving the second frame relative to the first frame, and a rotational member rotatably supported by the first frame and including an eccentric shaft portion, wherein the eccentric shaft portion has a first rotational portion including a first rotational center about which the second frame rotates relative to the first frame and a second rotational portion including a second rotational center about which the rotational member rotates relative to the first frame and which is eccentrically provided relative to the first rotational center.

Accordingly, the seat positioning apparatus includes the rotational member which rotatably supports the second frame and which is rotatably supported relative to the first frame of the seat. The rotational member includes the eccentric shaft portion, at which the first rotational center of the second frame rotating relative to the first frame is eccentrically located relative to the second rotational center of the rotational member rotating relative to the first frame. When the second frame rotates relative to the first frame, the first rotational center of the second frame which rotates relative to the first frame is moved relative to the second rotational center of the rotational member 1. As a result, displacement of the second rotational center of the second frame relative to the first frame is offset.

Further, the rotational member is rotatably supported relative to the first frame and the rotational member rotatably supports the second frame. Therefore, dimensions where the rotational member contacts the first frame and the second frame are sufficiently obtained. As a result, when the second frame receives an external load, for example, when an occupant is seated thereon, backlash is not generated and the second frame is surely rotatably supported relative to the first frame 4.

Still further, because the positioning apparatus of a seat for a vehicle is structured so that the rotational member is provided between the first frame and the second frame, the structure of the positioning apparatus of a seat for a vehicle is simplified. Therefore, the number of components is reduced compared to an seat positioning apparatus where another link member is provided in order to prevent the backlash generated when receiving the external load

According to another aspect of the invention, the first rotational portion of the eccentric shaft portion includes an outer circumferential surface rotatably contacting and supporting the second frame relative to the first frame, and the second rotational portion of the eccentric shaft portion includes an inner circumferential surface rotatably contacted and supported relative to a shaft portion fixed at the first frame for rotatably supporting the rotational member relative to the first frame.

Accordingly, the rotational member is slidably supported by the shaft portion at the inner circumferential surface of the rotational member fixed at the first frame, and the rotational member slidably supports the second frame by the outer circumferential surface of the rotational member. Therefore, the rotational member is in a stably and rotatably supportive relationship relative to the shaft portion and the secibd frame by means of a whole circumference of the inner circumferential surface of the eccentric shaft portion and a whole circumference of the outer circumferential surface of the eccentric shaft portion. Therefore, the second frame smoothly and stably pivots relative to the first frame.

According to another aspect of the invention, the rotational member includes a protruding portion provided at a position radially further outwardly than the outer circumferential surface and protruding into the second frame, and the second frame includes an elongated hole extending along an arc-shaped path defined about the first rotational center so that the protruding portion of the rotational member is rotatably movably engaged into the elongated hole.

Accordingly, when assembling the rotational member to the second frame, the protruding portion which protrudes from the rotational member is inserted into the first elongated hole of the second frame. Therefore, the rotational member is surely assembled to the second frame without falsely arranging a direction in which the first rotational center is positioned eccentrically relative to the second rotational center.

According to another aspect of the invention, the outer circumferential surface of the rotational member includes a pawl portion engaged with the second frame.

Accordingly, by respectively engaging the pawl portions with the second elongated holes formed at the sliding contact surface of the second frame, the rotational member is prevented from released from the second frame. Therefore, components are easily assembled.

According to another aspect of the invention, the rotational member is made of resin.

Accordingly, compared to a rotational member made of high-rigid metal, the rotational member slidably rotates tightly and smoothly relative to the shaft portion and the second frame.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a side view illustrating a seat for a vehicle according to an embodiment of the present invention;

Fig. 2 is a perspective view illustrating a positioning apparatus of a seat for a vehicle and a seat slide adjusting apparatus according to the embodiment;

Fig. 3 is an exploded perspective view illustrating the positioning apparatus of the seat for the vehicle according to the embodiment;

Fig. 4 is a front view illustrating the positioning apparatus of the seat for the vehicle, provided at a lower frame, according to the embodiment;

Fig. 5 is an exploded perspective view illustrating the lower frame, an arm, a rotational member and a shaft pin according to the embodiment;

Fig. 6 is a front view illustrating the arm, the rotational member and the shaft pin when a rotational hole portion is moved to a central position;

Fig. 7 is a front view illustrating the arm, the rotational member and the shaft pin when a rotational hole portion is moved to uppermost and bottommost positions;

Fig. 8 is a perspective view illustrating the rotational member, for indicating relationship between the rotational member and a sliding surface of the arm, and

Fig. 9 is a cross-sectional view illustrating the positioning apparatus of the seat for the vehicle, taken along line IX-IX in Fig. 4.

### DETAILED DESCRIPTION

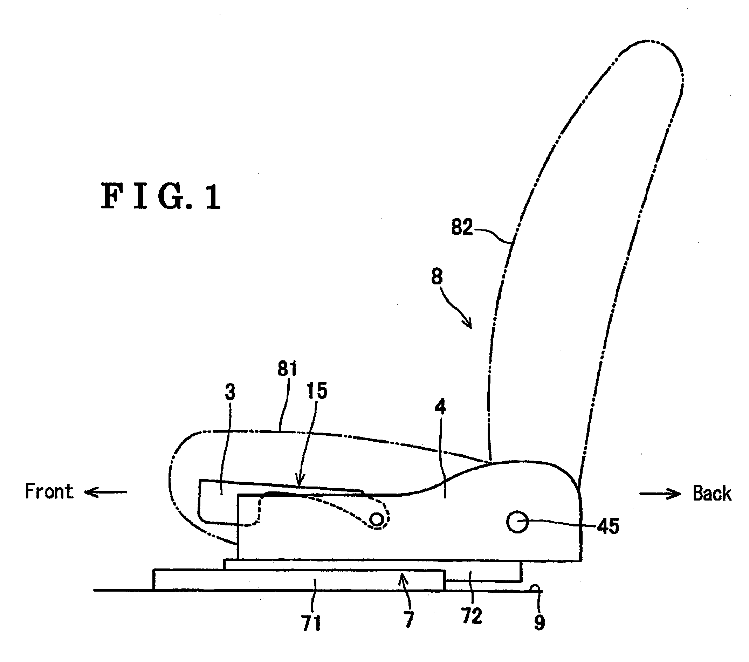

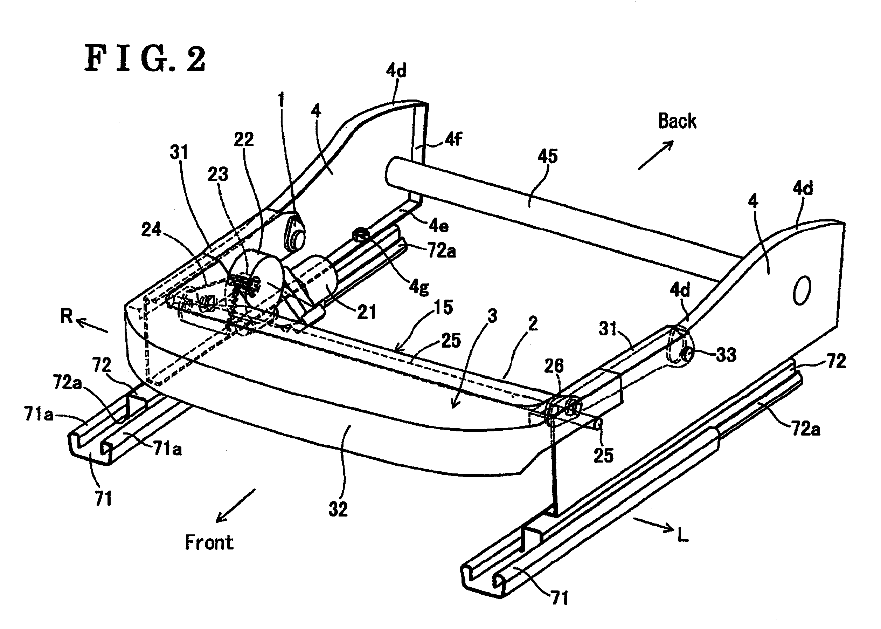

An embodiment of a positioning apparatus of a seat for a vehicle, which is indicated by reference numeral 15 (hereinafter referred to as a seat positioning apparatus 15), will be described hereinbelow with reference to the attached drawings. Arrows indicating Front, Back, R and L in Figs. 1 and 2 respectively correspond to directions of a front side, a back side, a right side and a left side of a vehicle seat 8 (a seat) when seen by an occupant seated thereon. Also, hereinbelow, directions of the positioning apparatus (and components thereof) in the embodiment correspond to the orientation of the vehicle seat 8 described above. The vehicle seat 8 includes a seat cushion 81 on which the occupant is seated, and a seat back 82 which is provided at the back portion of the seat cushion 81 for supporting a back of the occupant when he/she is seated. The seat positioning apparatus 15 according the embodiment adjusts a position of the seat cushion 81 in a vertical direction (i.e., an upper and lower direction). On the other hand, a position of the seat cushion 81 in the front-rear direction is adjusted by a seat slide adjusting apparatus 7.

The seat slide adjusting apparatus 7 includes left and right lower rails 71 and left and right upper rails 72 (which serve as a member provided on a vehicle floor 9). Each of the lower rails 71 is an elongated member extending in the front-rear direction (in the front-rear direction of the vehicle seat 8) and is fixed at the vehicle floor 9. As illustrated in Fig. 2, a cross-section of each of the lower rail 71 is formed in a substantially U-shape. Left and right ends of each of the lower rails 71 when seen in the cross section are formed in a pair of first engaging flanges 71a. Each of the upper rails 72 is an elongated member extending in the front-rear direction and a cross-section thereof is formed in a reverse T-shape. Further, left and right ends of each of the upper rails 72, when seen in the cross section, are formed in a pair of second engaging flanges 72a. The second engaging flanges 72a of the upper rails 72 engage with the first engaging flanges 71a of the corresponding lower rails 71 so as to be slidable relative to each other in the front-rear direction. Therefore, the seat cushion 81 is arranged to be slidable in the front-rear direction and to be fixed and retained at a predetermined front-rear adjusted position by means of a lock mechanism. Left and right lower frames 4 are fixed on the left and right upper rails 72, respectively.

As illustrated in Figs. 1 and 2, the seat positioning apparatus 15 includes the left and right lower frames 4 (each of which serves as a first frame), a sub frame 3 (which serves as a second frame) and a link mechanism 2. The left and right lower frames 4 support left and right sides of the seat cushion 81. The sub frame 3 is pivotably supported by the lower frames 4 and provided between the lower frames 4 and the seat cushion 81 for vertically (upwardly and downwardly) pivotally supporting the seat cushion 81. The link mechanism 2 is linked (cooperatively connected) to the sub frame 3 and is operated so as to cause the sub frame 3 to pivot relative to the lower frames 4.

The lower frames 4 are elongated members extending in the front-rear direction of the vehicle. An upper end portion and a lower end portion of each of the lower frames 4 are bent inwardly (i.e. in a direction towards a central portion of the seat cushion 81) so as to form a first upper flange portion 4d and a lower flange portion 4e. Each of the first upper flange portions 4d is connected to each of the lower flange portions 4e via each back flange portion 4f which is formed by inwardly bending a back portion of the corresponding lower frame 4. The left and right lower frames 4 are fixed at the left and right upper rails 72 by means of bolts 4g, respectively. More specifically, the lower flange portions 4e of the lower flanges 4 are fixed at the corresponding upper rails 72 by means of the corresponding bolts 4g. A rotating shaft 45 penetrates through the back portions of the left and right lower frames 4. Back frames are assembled at left and right ends of the rotating shaft 45, respectively, so as to support the seat back 82.

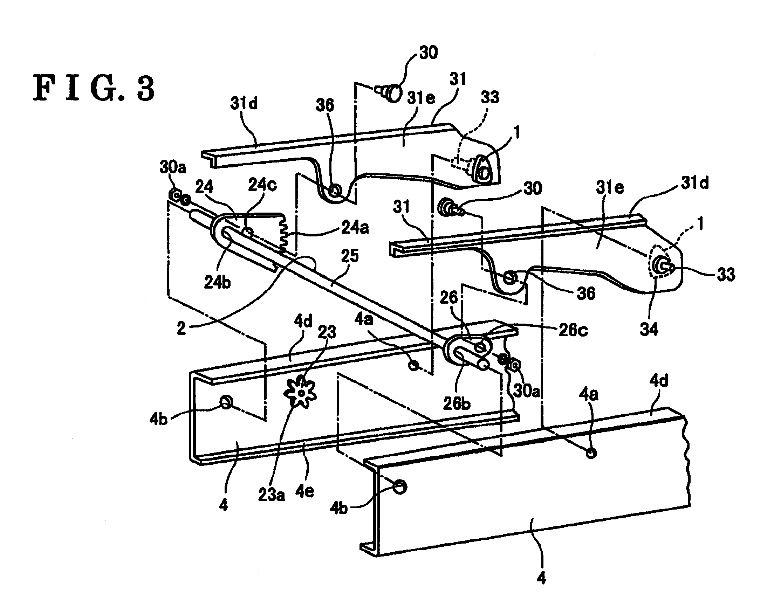

As illustrated in Figs. 2 and 3, the sub frame 3 includes left and right arms 31 (each of which serves as a second frame) and a bracket 32. The left and right arms 31 are pivotably supported by the first upper flange portions 4d of the corresponding lower frames 4. The bracket 32 is fixed at front portions of the left and right arms 31 by welding, for example. Each of the arms 31 is an elongated member extending in the front-rear direction of the vehicle and includes a vertical wall portion 31e and a second upper flange portion 31d. The vertical wall portion 31e is assembled at an inner side of the lower frame 4 and the second upper flange portion 31d is formed by bending an upper end portion of the vertical wall portion 31e outwardly (i.e. in a direction away from the central portion of the seat cushion 81) and is mounted on the first upper flange portion 4d of the lower frame 4. Hinge hole portions 34 are respectively formed at back portions of the vertical wall portions 31e of the arms 31. Shaft pins 33 (each of which serves as a shaft portion) are respectively rotatably inserted through the hinge hole portions 34 of the corresponding arms 31 and are fixed at the corresponding lower frames 4. Thus, the left and right arms 31 are structured to pivot about the hinge hole portions 34 relative to the corresponding lower frames 4. Further, rotational hole portions 36 are formed substantially at longitudinally intermediate portions of the corresponding arms 31. The rotational hole portions 36 are pivotally moved by means of the link mechanism 2.

As illustrated in Fig. 2, the link mechanism 2 includes a driving link member 24 (which serves as a link member), a driven link member 26 (which serves as a link member) and a torque rod 25. The driving link member 24 is provided at the right side R of the seat positioning apparatus 15. The driven link member 26 is provided at the left side L of the seat positioning apparatus 15. The torque rod 25, which extends in the right and left direction of the vehicle, is provided between the driving and driven link members 24 and 26. Further, right and left end portions of the torque rod 25 are supported by the driving and driven link members 24 and 26, respectively. A rotational torque generated at the driving link member 24 is transmitted to the driven link member 26 via the torque rod 25.

The driving link member 24 is a sector gear formed in an arc shape expanding to be wider towards the back side. Further, the driving link member 24 includes a first gear portion 24a at a back end potion thereof. The first gear portion 24a engages with a second gear portion 23a of a pinion 23, which is connected to an electric motor 21 and an output shaft of a deceleration mechanism 22, so that the rotational torque is transmitted from the electric motor 21 to the pinion 23 via the deceleration mechanism 22. The electric motor 21, the deceleration mechanism 22 and the pinion 23 are fixed at the right lower frame 4 and structured so as to be started to move and stopped by manually operating an operating button. The driving link member 24 is arranged between the right lower frame 4 and the right arm 31 of the right sub frame 3 and pivotably supported relative to the right lower frame 4 and the right arm 31. The first gear portion 24a formed at the back end portion of the driving link member 24 is formed along an arc-shaped path defined about a first torque hole 24b . When the second gear portion 23a of the pinion 23 rotates on the first gear portion 24a, the driving link member 24 pivots about the first torque hole 24b (more specifically, about the torque rod 25 inserted into the first torque hole 24b). The right end portion of the torque rod 25 is inserted into the first torque hole 24b of the driving link member 24 and fixed thereat by welding, for example. Likewise, the left end portion of the torque rod 25 is inserted into a second torque hole 26b of the driven link member 26 and fixed thereat by welding, for example. The right and left end portions of the torque rod 25, which respectively protrude further outwardly than positions at the torque rod 25 where the driving and driven link members 24 and 26 are respectively fixed, are rotatably inserted into holes 4b of the right and left lower frames 4, respectively.

The driven link member 26 is formed in an elliptical shape (i.e., substantially an oval shape), which extends in the front-rear direction, and does not include a gear portion while the driving link member 24 includes the first gear portion 24a. First and second rotational holes 24c and 26c are formed at the driving link member 24 and the driven link member 26, respectively. More specifically, the first and second rotational holes 24c and 26c are provided at further backward positions than positions where the first and second torque holes 24b and 26b are respectively provided, so that the first and second rotational holes 24c and 26c are positioned facing each other in an axial direction of stepped pins 30. The stepped pins 30 are inserted into the first rotational hole 24c of the driving link member 24 and the second rotational hole 26c of the driven link member 26, respectively. Further, the stepped pins 30 are inserted into the rotational hole portions 36, which are respectively opened at the left and right arms 31, and tightened by means of nut members 30a. Thus, the driving link member 24 and the driven link member 26 are pivotably supported relative to the corresponding arms 31.

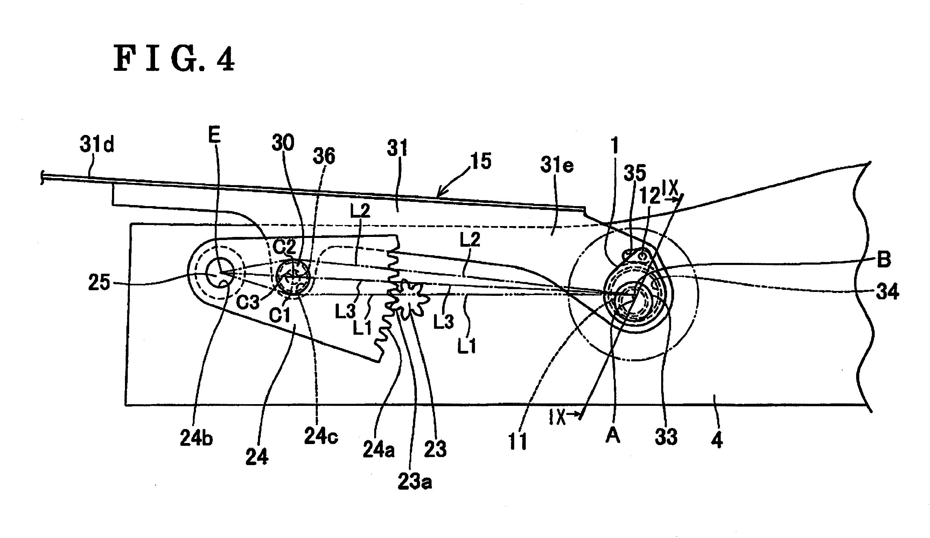

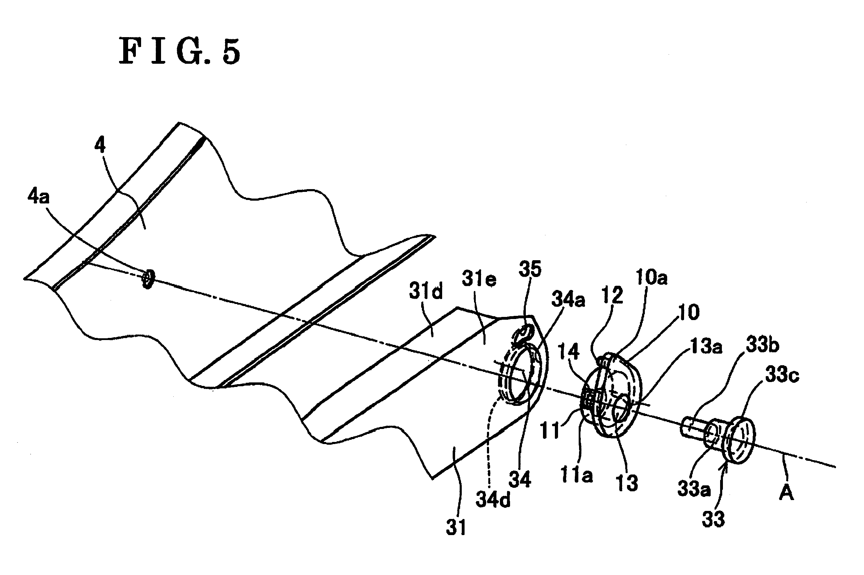

As illustrated in Figs. 4 and 5, when the driving and driven link members 24 and 26 rotate, the left and right arms 31 rotate about the corresponding binge hole portions 34. Structures and functions of the left and right sides of the seat positioning apparatus 15 are substantially the same, therefore, right side of the seat positioning apparatus 15 is mainly described hereinbelow as an example. A burred portion 34d is formed around the hinge hole portion 34 of each arm 31 so as to extend outwardly from the vertical wall portion 31e. Further, a rotational member 1 is rotatably inserted and fitted into the hinge hole portion 34 (right and left rotational members 1 are provided at the right and left arms 31, respectively). The rotational member 1 includes a head portion 10, an eccentric shaft portion 11 and a shaft hole 13. A diameter of the rotational member 1 is larger than a diameter of the hinge hole portion 34. The eccentric shaft portion 11 is slidably inserted into the hinge hole portion 34. The shaft hole 13 is formed through the rotational member 1 in an axial direction of the shaft pin 33. The eccentric shaft portion 11 includes an inner circumferential surface 13a (which serves as a second rotational portion) and an outer circumferential surface 11a (which serves as a first rotational portion). The inner circumferential surface 13a is formed at a side wall surface of the shaft hole 13 and has a center thereof at a point A (which serves as a second rotational center). The outer surface 11a has a center thereof at a point B (which serves as a first rotational center) which differs in location from the point A (i.e. a position where the point B is located is different from a position where the point A is located.) An intermediate portion 33a of the shaft pin 33 is rotatably inserted into the shaft hole 13. The intermediate portion 33a rotatably supports the inner circumferential surface 13a of the rotational member 1 relative to the shaft pin 33 by slidably contacting the inner circumferential surface 13a. The rotational member 1 rotates about the point A relative to the shaft pin 33. The shaft pin 33 is rotatably inserted at the arm 31, allowing the rotational member 1 to rotate about the point A relative to the arm 31.

The outer circumferential surface 11a of the eccentric shaft portion 11 pivotally supports the arm 31 by slidably contacting a sliding contact surface 34a which is formed at a side wall surface of the hinge hole portion 34 of the arm 31. The arm 31 pivots, relative to the lower frame 4, about the point B which is the center of the outer circumferential surface 11a of the rotational member 1. Lowermost and uppermost positions of a center of the rotational hole 36, herein, are assigned to be C1 and C2, respectively. When the arm 31 reaches a lowermost position thereof, the center of the rotational hole 36 is located at C1. When the arm 31 reaches an uppermost position thereof, the center of the rotational hole 36 is located at C2. Further, a central position between C1 and C2 is assigned to be C3. The point B is positioned on a line L3 connecting C3 and a point E (the first torque hole 24b), which is a pivot center of the driving link member 24. Therefore, when the rotational hole portion 36 is positioned at the lowermost position C1 or the uppermost position C2, the point B moves to a position b1 on the line L3. On the other hand, when the rotational hole portion 36 is positioned at the central position C3, the point B moves to a position b2 which is located at a backward position further than the position b1 on the line L3. Herein, L1 represents a line connecting the point B (the position b1) and the C1 of the center of the rotational hole 36. L2 represents a line connecting the point B (the position b1) and C2 of the center of the rotational hole 36. Likewise, L3 represents a line connecting the point B (the position b2) and C3 of the center of the rotational hole 36 Lengths of the lines L1, L2 and L3 are determined to be equal to each other. Therefore, a distance between the positions b1 and b2 is equal to a variable of a distance between the point B about which the arm 31 pivots and the rotational hole portion 36 which pivots on an arced path defined about the first torque hole 24b.

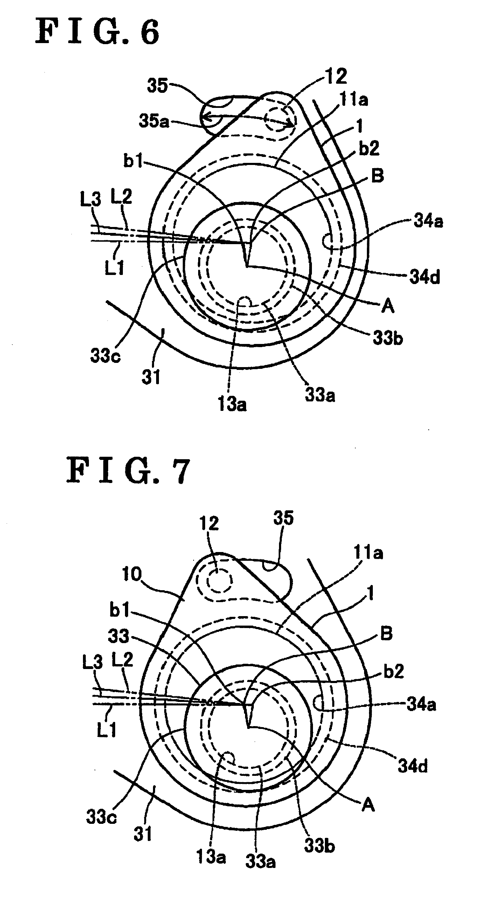

As illustrated in Figs. 5, 6, 7, and 8, the head portion 10 of the rotational member 1 includes an enlarged diameter portion 10a which is formed by partly enlarging the head 10 in a radial direction thereof. The enlarged diameter portion 10a includes a protruding portion 12 which protrudes towards the arm 31 (i.e. in the axial direction of the shaft pin 33). The arm 31 includes a first elongated hole (which serves as an elongated hole) 35 above the hinge hole portion 34. As illustrated in Figs. 6 and 7, the elongated hole 35 extends for a predetermined distance along an arc-shaped path defined about the point B (which is the pivot center of the outer circumferential surface 11a). Further, the elongated hole 35 includes a first length 35a which allows the rotational member 1 to rotate relative to the arm 31 within a predetermined angle range.

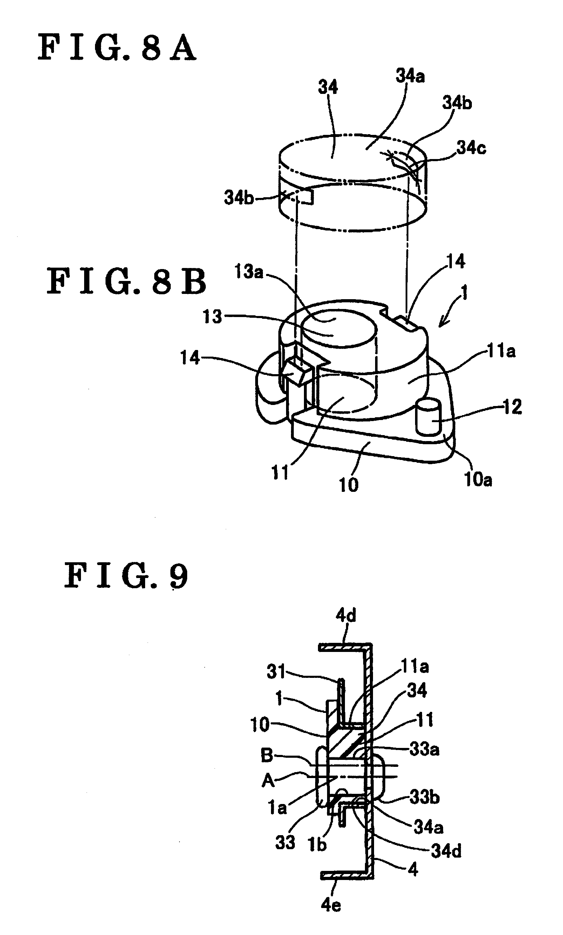

As illustrated in Fig. 8, pawl portions 14 are provided at the outer surface 11a of the rotational member 1 so as to protrude in a radial direction of the outer circumference surface 11a and are arranged so as to be opposite from each other in a circumferential direction of the outer surface 11a. Second elongated holes 34b are formed at the sliding contact surface 34a of the arm 31, respectively, so as to extend in a circumferential direction of the sliding surface 34a for a predetermined distance. The pawl portions 14 engage with the second elongated holes 34b of the rotational member 1, respectively. Each of the second elongated holes 34b includes a second length 34c which allows a pivotal movement of the corresponding pawl portion 14 when the rotational member 1 rotates within a predetermined angle range.

As illustrated in Figs. 5, 6, 7, and 8, when assembling the arm 31 and the rotational member 1 to the lower frame 4, first, the eccentric shaft portion 11 of the rotational member 1 is inserted into the hinge hole portion 34 of the arm 31 and the protruding portion 12 of the rotational member 1 is engaged into the first elongated hole 35. By inserting the rotational member 1 into the hinge hole portion 34, the pawl portions 14 formed at the outer surface 11a of the rotational member 1 respectively engage with the second elongated holes 34b formed at the sliding surface 34a of the arm 31, thus the rotational member 1 is assembled onto the arm 31. Second, the shaft pin 33 is inserted into the shaft hole 13 of the rotational member 1 and a leg portion 33b of the shaft pin 33 is inserted into the hole 4a of the lower frame 4. Third, as illustrated in Fig. 9, the leg portion 33b is caulked so that the shaft pin 33 is fixed at the lower frame 4. Further, the rotational member 1 in the embodiment is made of resin, however, other components are made of metal.

An operation of the seat positioning apparatus 15 according to the embodiment will be described hereinbelow. When the operating button is manually operated, as illustrated in Fig. 2, the electric motor 21 starts to rotate and the decelerating mechanism 22 decelerates a rotating speed (rotational torque) of the electric motor 21. Then, the rotational torque is transmitted to the pinion 23, and then the pinion 23 is operated to rotate. Then, by means of the rotation of the pinion 23, the driving link member 24 pivots about the point E of the first torque hole 24b relative to the lower frame 4. Because the torque rod 25 is inserted into and fixed at the first torque hole 24b, the torque rod 25 is rotated by the rotation of the first link member 24. Therefore, the rotational torque is transmitted to the driven link member 26. Thus, the driving link member 24 and the driven link member 26 pivot synchronously.

As illustrated in Figs. 2 and 3, when the driving link member 24 and the driven link member 26 pivot, the left and right arms 31,which are rotatably supported by the left and right rotational hole portions 36, pivot relative to the lower frame 4. Operations of the driving link member 24 and the driven link member 26 are substantially the same. Therefore, the operation of the driving link member 24 is described hereinbelow as an example. As illustrated in Fig. 4, when the driving link member 24 pivots downwardly by means of the rotation of the pinion 23, the arm 31 pivots downwardly. Likewise, when the driving link member 24 rotates upwardly by means of the rotation of the pinion 23, the arm 31 pivots upwardly. The rotational hole portion 36 of the arm 31 pivots on an arc-shaped path defined about the point E of the torque hole. Then, the arm 31 pivots about the point B which is located on the rotational member 1. The point B is located at a eccentric position relative to the point A which is the rotational center of the rotational member 1. Therefore, when the rotational hole portion 36 pivots along the arc-shaped path, a position of the point B relative to the point A is changed. As a result, displacement of the pivot center of the arm 31 relative to the lower frame 4 is offset. Therefore, the arm 31 smoothly pivots relative to the lower frame 4.

The seat positioning apparatus 15 according to the embodiment includes the rotational member 1 which rotatably supports the arm 31 and which is rotatably supported relative to the lower frame 4 of the seat 8. The rotational member 1 includes the eccentric shaft portion 11, at which the pivot center (the point B) of the arm 31 pivoting relative to the lower frame 4 is eccentrically located relative to the rotational center (the point A) of the rotational member 1 rotating relative to the lower frame 4. When the arm 31 pivots relative to the lower frame 4, the pivot center (the point B) of the arm 31 which rotates relative to the lower frame 4 is moved relative to the rotational center (the point A) of the rotational member 1. Further, the arm 31 is rotatably supported at the lower frame 4 and operatively connected to the driving link member 24 at the rotational hole portion 36. Therefore, the arm 31 and the driving link member 24 pivot smoothly. The other arm (left arm) 31 linked to the driven link member 26 is cooperatively pivoted in association with the movement of the right arm 31 in the same manner as described above.

Further, the rotational member 1 is rotatably supported relative to the lower frame 4 and the rotational member 1 rotatably supports the arm 31. Therefore, dimensions where the rotational member 1 contacts the lower frame 4 and the arm 31 are sufficiently obtained. As a result, when the arm 31 receives an external load, for example, when an occupant is seated thereon, backlash is not generated and the arm 31 is surely rotatably supported relative to the lower frame 4.

Still further, because the seat positioning apparatus 15 is structured so that the rotational member 1 is provided between the lower frame 4 and the arm 31, the structure of the seat positioning apparatus 15 is simplified. Therefore, the number of components is reduced compared to an seat positioning apparatus where another link member is provided in order to prevent the backlash generated when receiving the external load.

Furthermore, the rotational member 1 is slidably supported by the shaft pin 33 at the inner circumferential surface 13a of the rotational member 1 fixed at the lower frame 4, and the rotational member 1 slidably supports the arm 31 by the outer circumferential surface 11a of the rotational member 1. Therefore, the rotational member 1 is in a stably and rotatably supportive relationship relative to the shaft pin 33 and the arm 31 by means of a whole circumference of the inner circumferential surface 13a of the eccentric shaft portion 11 and a whole circumference of the outer circumferential surface 11a of the eccentric shaft portion 11. Therefore, the arm 31 smoothly and stably pivots relative to the lower frame 4.

Still further, when assembling the rotational member 1 to the arm 31, the protruding portion 12 which protrudes from the rotational member 1 is inserted into the first elongated hole 35 of the arm 31. Therefore, the rotational member 1 is surely assembled to the arm 31 without falsely arranging a direction in which the point B is positioned eccentrically relative to the point A. Further, the outer circumferential surface 11a of the rotational member 1 includes the pawl portions 14 which engage with the arm 31. By respectively engaging the pawl portions 14 with the second elongated holes 34b formed at the sliding contact surface 34a of the arm 31, the rotational member 1 is prevented from released from the arm 31. Therefore, components are easily assembled.

Furthermore, the rotational member 1 is made of resin. Therefore, compared to a rotational member made of high-rigid metal, the rotational member 1 slidably pivots tightly and smoothly relative to the shaft pin 33 and the arm 31.

According to the embodiment, the point B is positioned on a line L3 connecting a point E (the first torque hole 24b) which is a pivot center of the driving link member 24 and an central position C3 located between the lowermost position C1 and the uppermost position C2 of the third rotating hole 36 of the arm 31. Therefore, the point B reciprocates substantially in a straight manner between the position b1 and the position b2 located on the line L3. However, the point B is not necessarily positioned on the line L3 and may be positioned at another position. In such a case, the path of the point B is not defined in a straight manner. Further, a positional relationship between the point A and the point B is not limited as described in the above-described embodiment. Alternatively, for example, the point B may be located at a more downward position than the position where the point A is located. Further, for example, the point B may be located either upwardly or downwardly further than the point A and either frontwardly or rearwardly further than the point A. Moreover, a distance between the point A and the point B may be changed.

Further, according to the embodiment, the protruding portion 12 for determining an assembling position is formed in an eccentric direction, i.e. in a direction in which the point B is located eccentrically relative to the point A of the rotational center of the rotational member 1. However, the position of the protruding portion 12 is not limited to the position described above. Alternatively, the protruding portion 12 may be provided at any other position located in a circumference direction of the rotational member 1.

Still further, according to the embodiment, the rotational torque is generated by means of the electric motor 21. However, the rotational torque may be generated manually. A positioning apparatus of a seat for a vehicle includes a first frame (4) adapted to be supported by a member (71, 72) provided on a vehicle floor (9) and adapted to support a seat cushion (81), a second frame (3) rotatably supported by the first frame (4) and vertically rotatably supporting the seat cushion (81), a link member (24, 26) rotatably supported by the first frame (4) and linked to the second frame (3) for rotatably moving the second frame (3) relative to the first frame (4), and a rotational member (1) rotatably supported by the first frame (4) and including an eccentric shaft portion (11), wherein the eccentric shaft portion (11) has a first rotational portion (11a) including a first rotational center (B) about which the second frame (3) rotates relative to the first frame (4) and a second rotational portion (13a) including a second rotational center (A) about which the rotational member (1) rotates relative to the first frame (4) and which is eccentrically provided relative to the first rotational center (B).

## Claims

1. A positioning apparatus (15) of a seat for a vehicle comprising:
a first frame (4) adapted to be supported by a member (71, 72) provided on a vehicle floor (9) and adapted to support a seat cushion (81) of the seat (8);
a second frame (3) rotatably supported by the first frame (4) and adapted to vertically rotatably support the seat cushion (81);
a link member (24, 26) rotatably supported by the first frame (4) and linked to the second frame (3) for rotatably moving the second frame (3) relative to the first frame (4); and
a rotational member (1) rotatably supported by the first frame (4) and including an eccentric shaft portion (11), wherein
the eccentric shaft portion (11) has a first rotational portion (11a) including a first rotational center (B) about which the second frame (3) rotates relative to the first frame (4) and a second rotational portion (13a) including a second rotational center (A) about which the rotational member (1) rotates relative to the first frame (4) and which is eccentrically provided relative to the first rotational center (B).

2. A positioning apparatus of a seat for a vehicle according to claim 1, wherein the first rotational portion (11a) of the eccentric shaft portion (11) includes an outer circumferential surface rotatably contacting and supporting the second frame (3) relative to the first frame (4), and the second rotational portion (13a) of the eccentric shaft portion (11) includes an inner circumferential surface rotatably contacted and supported relative to a shaft portion (33a) fixed at the first frame (4) for rotatably supporting the rotational member
(1) relative to the first frame (4).

3. A positioning apparatus of a seat for a vehicle according to claim 2, wherein the rotational member (1) includes a protruding portion (12) provided at a position radially further outwardly than the outer circumferential surface (11a) and protruding into the second frame (3), and wherein the second frame (3) includes an elongated hole (35) extending along an are-shaped path defined about the first rotational center (B) so that the protruding portion (12) of the rotational member (1) is rotatably movably engaged into the elongated hole (35).

4. A positioning apparatus of a seat for a vehicle according to any of claims 2 and 3, wherein the outer circumferential surface (11a) of the rotational member (1) includes a pawl portion (14) engaged with the second frame (3).

5. A positioning apparatus of a seat for a vehicle according to any of claims 1 to 4, wherein the rotational member (1) is made of resin.
